# DEMANDE DE BREVET EUROPEEN

(11) **EP 2 022 673 A1**
(43) Date de publication de la demande: **11.02.2009**
(21) Numéro de dépôt: 08160065.2
(22) Date de dépôt: 10.07.2008
(51) Int. Cl.: B60R 5/04

(54) **Tablette arrière pour véhicules automobiles et véhicule automobile équipé d'une telle tablette arrière**

(30) Priorité: 06.08.2007 FR 0756963
(71) Demandeur: Peugeot Citroën Automobiles SA, 78140 Vélizy-Villacoublay (FR)
(72) Inventeur: Landet, Thierry, 92250 La Garenne Colombes (FR)
(74) Mandataire: Vigand, Régis Louis Michel

(57) **Abrégé**

L'invention concerne une tablette arrière (10) pour véhicules automobiles, destinée à recouvrir un coffre (3) à l'arrière du véhicule, caractérisée en ce qu'elle comprend une partie fixe (11) sensiblement horizontale en forme de U et, à l'intérieur dudit U, une partie pivotante (15) articulée au niveau de son bord transversal (15a) avant, sur la partie fixe (11), et déplaçable entre une position sensiblement horizontale dans le prolongement de ladite partie fixe (11) et une position relevée pour accéder au coffre (3) du véhicule.

## Description

La présente invention concerne une tablette arrière pour véhicules automobiles, ainsi qu'un véhicule automobile équipé d'une telle tablette arrière.

De nombreux véhicules automobiles et plus particulièrement les véhicules automobiles équipés d'un hayon arrière comporte une tablette arrière destinée à recouvrir l'espace de rangement dans un coffre délimité par le hayon, les flancs latéraux et le plancher du véhicule et également par les dossiers des sièges arrière.

Ces tablettes ont pour rôle de cacher les objets ou les bagages disposés dans le coffre et également d'améliorer l'esthétique de l'intérieur du véhicule en recouvrant ledit coffre.

Généralement, l'ensemble de la tablette est amovible afin de pouvoir augmenter le volume de chargement du coffre et cet ensemble est aussi monté pivotant sur les dossiers de la rangée de sièges arrière pour augmenter l'accessibilité à ce coffre.

La forme arrière de certains véhicules est telle qu'elle ne permet pas le pivotement de la tablette arrière, ce qui ne facilite pas l'accès au coffre, pour l'introduction ou le retrait des bagages.

A cet effet, on connaît dans le document EP-A-1 625 972 une tablette arrière dont une partie est formée par un store enrouleur présentant une toile souple susceptible d'être déployée dans le plan de ladite tablette pour recouvrir une ouverture ménagée dans un élément rigide et plan de ladite tablette et d'être repliée pour permettre un accès au coffre sans déplacer cette tablette.

Mais, ce type de tablette arrière est relativement coûteux à fabriquer et pour augmenter l'accessibilité au coffre, après l'ouverture du hayon, l'utilisateur doit effectuer une manoeuvre supplémentaire pour enrouler le store.

L'invention a pour but de proposer une tablette arrière qui remédie à ces inconvénients.

L'invention a donc pour objet une tablette arrière pour véhicules automobiles destinée à recouvrir un coffre à l'arrière du véhicule, **caractérisé en ce qu**'elle comprend une partie fixe sensiblement horizontale en forme de U et, à l'intérieur dudit U, une partie pivotante articulée au niveau de son bord transversal avant sur la partie fixe et déplaçable entre une position sensiblement horizontale dans le prolongement de ladite partie fixe et une position relevée pour accéder au coffre du véhicule.

Selon d'autres caractéristiques de l'invention :
- la partie pivotante est déplaçable entre lesdites positions par un hayon de coffre du véhicule, et
- les parties, respectivement fixe et pivotante, sont amovibles.

L'invention a également pour objet un véhicule automobile, caractérisé en ce qu'il comporte une tablette arrière telle que précédemment mentionnée.

D'autres caractéristiques et avantages de l'invention apparaîtront à la lecture de la description qui va suivre, donnée à titre d'exemple et faite en référence aux dessins annexés, sur lesquels :
- la figure 1 est une vue schématique en perspective d'une partie de l'arrière d'un véhicule automobile avec une tablette arrière conforme à l'invention, dans sa position de recouvrement du coffre, et
- la figure 2 est une vue schématique analogue à la figure 1 avec la tablette arrière dans sa position facilitant l'accès au coffre.

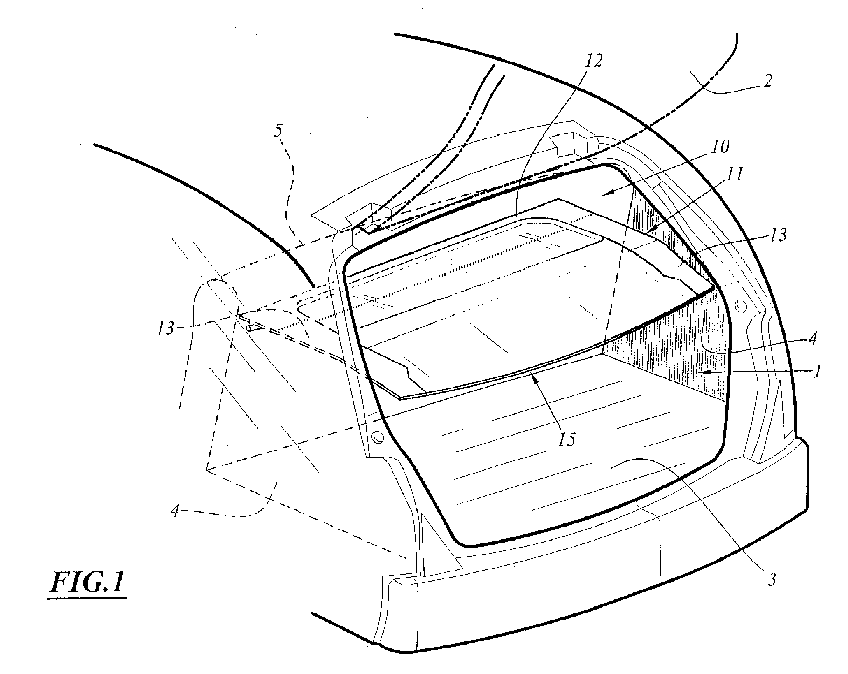

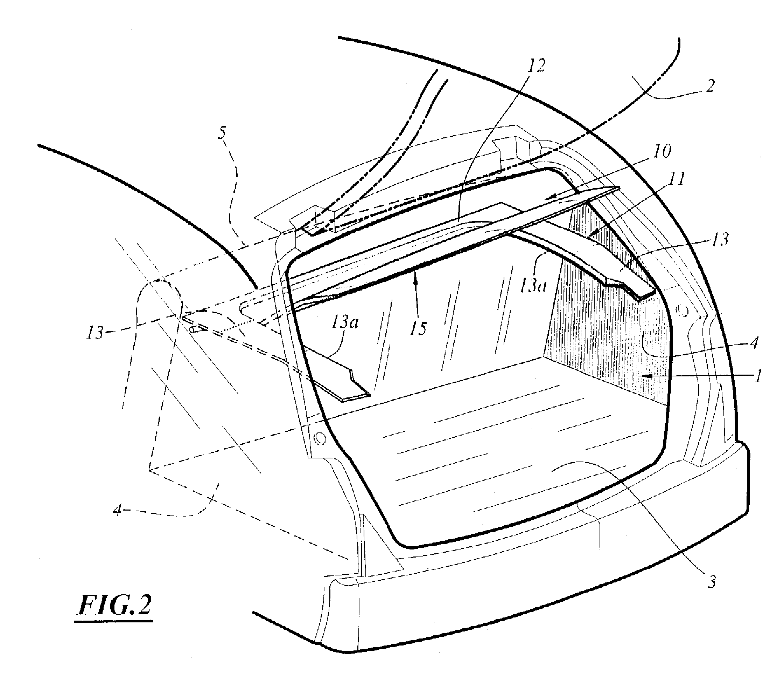

Sur les figures 1 et 2, on a représenté schématiquement une partie de l'arrière d'un véhicule automobile qui comporte, de manière classique, un coffre 1 délimité par un hayon 2 représenté partiellement en traits mixtes et déplaçable entre une position de fermeture de la partie arrière du véhicule automobile et une position d'ouverture pour dégager l'accès au coffre 1.

Ce coffre 1 est également délimité, à sa partie inférieure, par un plancher 3, latéralement par deux flancs 4 opposés et parallèles, à sa partie avant, par des dossiers 5 d'une rangée de sièges arrière et, à sa partie supérieure, par une tablette arrière désigné dans son ensemble par la référence 10, conforme à l'invention.

Cette tablette 10 est formée d'une partie fixe 11 sensiblement horizontale en forme de U, comportant une branche centrale 12 et deux branches latérales symétriques et parallèles, respectivement 13 et 14.

La branche centrale 12 et les deux branches latérales 13 et 14 sont de préférence une seule et même pièce. Cette pièce est également démontable pour permettre de rabattre la rangée de sièges arrière de façon à permettre le chargement d'objets volumineux dans le véhicule

La tablette arrière 10 comporte également une partie pivotante 15 disposée à l'intérieur du U de la partie fixe 11 et de formes complémentaires à l'ouverture ménagée entre la branche centrale 12 et les deux branches latérales, respectivement 13 et 14 de ladite partie fixe 11. La partie pivotante 15 est articulée au niveau de son bord transversal avant 15a sur la partie fixe 11 et plus particulièrement sur la branche centrale 12 de ladite partie fixe 11. La partie pivotante 15 est articulée par exemple au moyen d'au moins une charnière, non représentée, et de préférence, au moyen de deux charnières.

Cette partie pivotante 15 est déplaçable entre une position sensiblement horizontale dans le prolongement de la partie fixe 11, ainsi que montrée à la figure 1, de façon à recouvrir le coffre 3 pour dissimuler les objets ou les bagages éventuellement placés dans ce coffre et une position relevée, ainsi que représentée à la figure 2, pour accéder au coffre 3 et augmenter ainsi son accessibilité.

De préférence, le déplacement de la partie pivotante 15 entre lesdites positions est assuré au moyen du hayon 2 lors de son ouverture. Pour cela, la partie mobile 15 est reliée au hayon 2 par des moyens appropriés, non représentés et de type connu, comme par exemple des organes de liaison souples.

Selon un mode de réalisation préférentiel, les parties, respectivement fixe 11 et pivotante 15, sont amovibles et peuvent se démonter entièrement afin d'augmenter le volume de chargement du coffre 3.

Dans la position de recouvrement du coffre 3, la partie pivotante 15 de la tablette arrière 10 est en appui sur des rebords 13a ménagés sur le bord interne de chaque branche latérale 13 de la partie fixe 11, comme montré à la figure 2.

La tablette arrière 10 relevée libère donc un espace généreux pour le chargement du coffre 3 et la surface utile déterminée par cette tablette arrière 10 dans sa position de recouvrement du coffre est conservée.

De plus, avec la tablette arrière conforme à l'invention, l'esthétique de la plage arrière ainsi que de la partie arrière du véhicule n'est pas altérée.

## Revendications

1. Tablette arrière pour véhicules automobiles, destinée à recouvrir un coffre (3) à l'arrière du véhicule, **caractérisée en ce qu'**elle comprend une partie fixe (11) sensiblement horizontale en forme de U et, à l'intérieur dudit U, une partie pivotante (15) articulée au niveau de son bord transversal (15a) avant, sur la partie fixe (11), et déplaçable entre une position sensiblement horizontale dans le prolongement de ladite partie fixe (11) et une position relevée pour accéder au coffre (3) du véhicule.

2. Tablette arrière selon la revendication 1, **caractérisée en ce que** la partie pivotante (15) est déplaçable entre lesdites positions par un hayon (2) de coffre du véhicule.

3. Tablette arrière selon la revendication 1 ou 2, **caractérisée en ce que** les parties, respectivement fixe (11) et pivotante (15), sont amovibles.

4. Véhicule automobile, **caractérisé en ce qu'**il comporte une tablette arrière (10) selon une quelconque des revendications 1 à 3.
